# EUROPEAN PATENT SPECIFICATION

(11) **EP 1 260 717 B1**
(45) Date of publication and mention of the grant of the patent: **02.12.2009**
(21) Application number: 02011365.0
(22) Date of filing: 23.05.2002
(51) Int. Cl.: F16B 5/02

(54) **Arrangement for attaching two members to each other**
Anordnung zum gegenseitigen Verbinden zweier Elemente
Arrangement d'assemblage de deux éléments entre eux

(30) Priority: 23.05.2001 JP 2001153939
(43) Date of publication of application: 27.11.2002
(73) Proprietor: HONDA GIKEN KOGYO KABUSHIKI KAISHA, Minato-ku, Tokyo (JP); AOYAMA SEISAKUSHO CO., LTD., Nagoya-shi, Aichi-ken (JP)
(72) Inventor: Goto, Mitsushige, Wako-shi, Saitama (JP); Ito, Shuji, Oguchi-cho, Niwa-gun, Aichi (JP); Ozawa, Junzo, Oguchi-cho, Niwa-gun, Aichi (JP)
(74) Representative: Prechtel, Jörg

(56) References cited:
- WO-A-02/10595
- US-A- 4 043 239
- PATENT ABSTRACTS OF JAPAN vol. 1998, no. 14, 31 December 1998 (1998-12-31) & JP 10 236336 A (SUZUKI MOTOR CORP), 8 September 1998 (1998-09-08)

## Description

### TECHNICAL FIELD

The present invention relates to an arrangement for attaching two members to each other, and in particular to an attaching arrangement suitable for attaching a steering hanger pipe between two front pillars of a vehicle body.

### BACKGROUND OF THE INVENTION

Document WO 02/10595 which is an intermediate document with respect to the present invention discloses an arrangement for attaching a pair of members to each other comprising a nut member fixed on a first member, wherein the nut member is provided with a small normal threaded hole near an axial end of said nut member remote from second member and a large reverse threaded hole near the other axial end of said nut member adjacent to the second member and axially aligned with said small threaded hole. Threaded into said large reverse threaded hole of said nut member is a cylindrical spacer member with a central through hole and a small normal threaded hole having a same configuration as said small normal threaded hole of said nut member and axially aligned with said large reverse threaded hole. In order to attach the members to each other, the known arrangement comprises a threaded bolt adapted to be passed through a hole provided in said second member and provided with a normal threaded part that is adapted to be threaded into said small normal threaded holes of said spacer and nut members.

JP 10-236336 A discloses a structure in which a steering hanger bracket for supporting a steering shaft is attached to a pipe member extending laterally across the vehicle body, and the pipe member is connected between the inner surfaces of the front pillars.

Typically, the pipe member (steering hanger pipe) is fixedly attached to the vehicle body by attaching a flange fixedly attached to each end thereof to the inner surface of the corresponding front pillar by using threaded bolts, or by attaching the flange to a bracket fixedly attached to the inner surface of the front pillar by using threaded bolts.

However, according to such a prior art, when joining the steering hanger pipe to the inner surface of the front pillar, threaded bolts are required to be fastened from the inner side of the vehicle body. This work requires the worker to face upward or otherwise take a highly uncomfortable position.

Furthermore, because variations in the dimension between the opposing inner surfaces of the front pillars are inevitable, means for accommodating such variations is required. If the length of the pipe member is longer than the distance between the front pillars, it is simply impossible to connect the two pillars with the pipe member as it would not fit. If the length of the pipe member is shorter than the distance between the front pillars, a gap is created between an end of the pipe member and the opposing part of the front pillar. If the threaded bolts are fastened under such a condition, the pipe member would not be properly secured and the front pillar may even deform to an unacceptable extent.

For illustration of the background art, reference can also be made to document US-A-4 043 239 disclosing an arrangement for attaching two members to each other, comprising a nut member, a cylindrical spacer member and a threaded bolt, wherein the bolt is threaded into the spacer member via a normal thread and the spacer member is threaded into the nut member via a reverse thread.

### BRIEF SUMMARY OF THE INVENTION

In view of such problems of the prior art, a primary object of the present invention is to provide an arrangement for attaching two members to each other which is adapted to accommodate a positional error between the two members and which shows reliable operation.

A second object of the present invention is to provide an arrangement for attaching two members to each other which facilitates the assembly work.

A third object of the present invention is to provide an arrangement for attaching two members to each other which is easy to work by allowing the threaded bolts to be fastened from a convenient direction.

A fourth object of the present invention is to provide an arrangement for attaching two members to each other which is suitable for attaching a steering hanger pipe to front pillars of an automobile.

According to the present invention, such objects can be accomplished by providing an arrangement for attaching a pair of members to each other, comprising: a nut member attached to or provided on a first member, the nut member being provided with a small normal threaded hole near an axial end of the nut member remote from a second member and a large reverse threaded hole near the other axial end of the nut member adjacent to the second member and axially aligned with the small threaded hole; a substantially cylindrical spacer member defining a central through hole therein, the spacer member being provided with a large reverse threaded part on an outer circumferential surface thereof which is threaded into the large reverse threaded hole of the nut member and a small normal threaded hole having a same configuration as the small normal threaded hole of the nut member and axially aligned with the large reverse threaded hole; and a threaded bolt adapted to be passed through a hole provided in the second member and provided with a normal threaded part which is adapted to be threaded into the small normal threaded holes of the spacer and nut members.

Thus, a gap that may exist between the two members is filled by the spacer member as the threaded bolt is threaded into the spacer member owing to the presence of the reverse thread, and the two member can be firmly secured to each other as the threaded part of the threaded bolt is threaded into the small threaded hole of the nut member.

To enhance the action of the attaching arrangement of the present invention, a friction enhancing agent such as an adhesive agent is applied to the threaded part of the threaded bolt and/or the threaded hole of the spacer member. This facilitates the action of the spacer member to fill the gap between the first and second member as the threaded bolt is threaded into the threaded hole of the spacer member by virtue of the reverse threaded part formed around the spacer member. Such an agent also helps to prevent the loosening of the threaded part during use as well known in the art.

The nut member may comprise a cylindrical main body passed through an opening provided in the first member and a radial flange formed on one axial end of the cylindrical part and abutting an end surface of the first member, the flange being fixedly attached to the end surface of the first member, for instance by projection welding. The spacer member may be provided with a cylindrical main body on which the large reverse threaded part is formed, and a flange portion on an axial end of the cylindrical main body facing the second member. Typically, the threaded bolt is provided with a small diameter part extending from an end of the threaded part thereof remote from a front end thereof, the small diameter part being provided with an outer diameter small than an inner diameter (crest diameter) of the small threaded hole of the spacer member.

According to a preferred embodiment of the present invention, the second member is provided with a pair of sheet metal members and a collar member extending between the sheet metal members, the hole of the first member being passed through the sheet metal members and collar member in an axial alignment. For instance, the first member consists of a part of a steering hanger pipe, and the second member consists of a front pillar of a motor vehicle.

For the convenience of unfastening the threaded bolt and separating the first and second members from each other, the nut member may be provided with an engagement portion for engaging a tool such as a wrench for turning the nut member.

### BRIEF DESCRIPTION OF THE DRAWINGS

Now the present invention is described in the following with reference to the appended drawings, in which:
Figure 1 is a fragmentary perspective view of a steering hanger pipe attached to a front pillar of a vehicle body by an attaching arrangement embodying the present invention;
Figure 2 is a sectional view showing the attaching arrangement before the threaded bolt is fastened;
Figure 3 is a view similar to Figure 1 when the threaded bolt is in an early stage of fastening;
Figure 4 is a view similar to Figure 1 when the threaded bolt is fastened halfway through; and
Figure 5 is a view similar to Figure 1 when the threaded bolt is fully fastened.

### DETAILED DESCRIPTION OF THE PREFERRED EMBODIMENTS

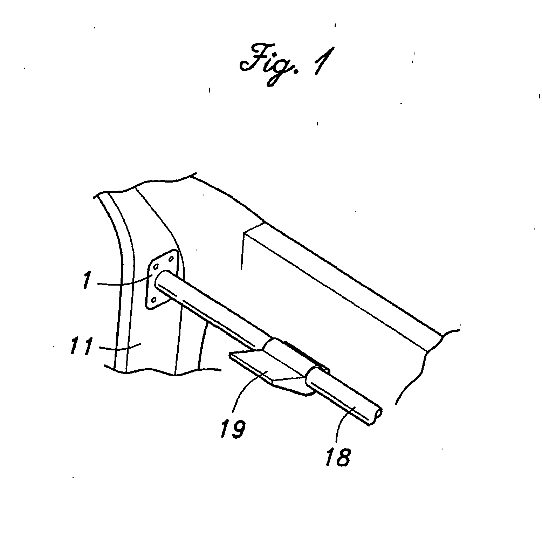

Figure 1 shows a steering hanger pipe 18 carrying a hanger bracket 19 and attached to a front pillar 11 of an automotive vehicle body via a side plate 1 provided at an end of the steering hanger pipe 18, and this side plate 1 is attached to the front pillar 11 via an attaching arrangement according to the present invention.

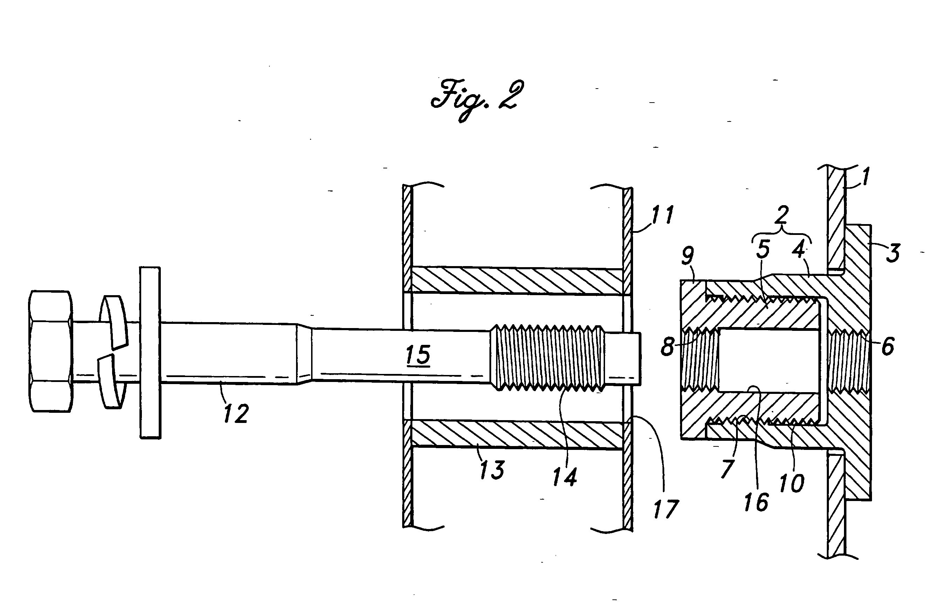

Figure 2 shows the attaching arrangement in more detail. The side plate 1 is integrally attached to each end of the steering hanger pipe 18 extending laterally across the vehicle body. A plurality of adjust nut assemblies 2 are attached to each side plate 1.

Each adjust nut assembly 2 is provided with a nut member 4 including a cylindrical main body fixedly attached to the side plate 1 via a radially outwardly extending flange 3 formed in a bottom part thereof by projection welding, for instance, and a spacer member 5 having a substantially cylindrical shape.

The nut member 4 is provided with a female normal threaded hole 6 formed centrally in the bottom wall of the nut member 4 facing away from the front pillar 11, and a female reverse threaded hole 7 formed in the inner circumferential surface of the open end of the nut member 4 facing the front pillar 11. Of these two female threaded holes 6 and 7, the female reverse threaded hole 7 is larger in diameter than the female normal threaded hole 6. The two threaded holes 6 and 7 are axially aligned to each other.

The spacer member 5 is provided with a through hole 16 extending across the length thereof, and a female normal threaded hole 8 having a same diameter and pitch as the female normal threaded hole 6 of the nut member 4 in the inner circumferential surface of an open end of the spacer member 5 facing the front pillar 11, and this end of the spacer member 5 is formed with a radially outwardly extending flange 9. A male reverse threaded part 10 is formed on the outer circumferential surface of the spacer member 5 over the entire axial length thereof, and is threaded into the female reverse threaded hole 7 of the nut member 4. The female normal threaded hole 6, female normal threaded hole 8 and male reverse threaded part 10 are axially aligned to each other.

When attaching the side plate 1 (of the steering hanger pipe) fitted with the adjust nut assembly 2 to the front pillar 11, the outer end surface of the spacer member 5 is placed opposite the inner surface of the front pillar 11, and a threaded bolt 12 is passed into a through hole 17 defined in the front pillar 11 from outside the front pillar 1, and is threaded into the female normal threaded hole 8 of the spacer member 5 (see Figure 2). The part of the front pillar 11 for attaching the steering hanger pipe is reinforced by a tubular collar 13 which extends between a pair of sheet metal members opposing each other, and the through hole 17 of the front pillar 11 is passed through the sheet metal members and collar member in an axial alignment.

The front end of the bolt 12 is provided with a male normal threaded part 14, and a reduced diameter portion 15 having a smaller diameter than the valley diameter of the male normal threaded part 14 extends from an end of the male normal threaded part 14 remote from the front end of the threaded bolt. The through hole 16 of the spacer member 5 is provided with an inner diameter greater than the ridge diameter of the threaded part 14 of the threaded bolt 12.

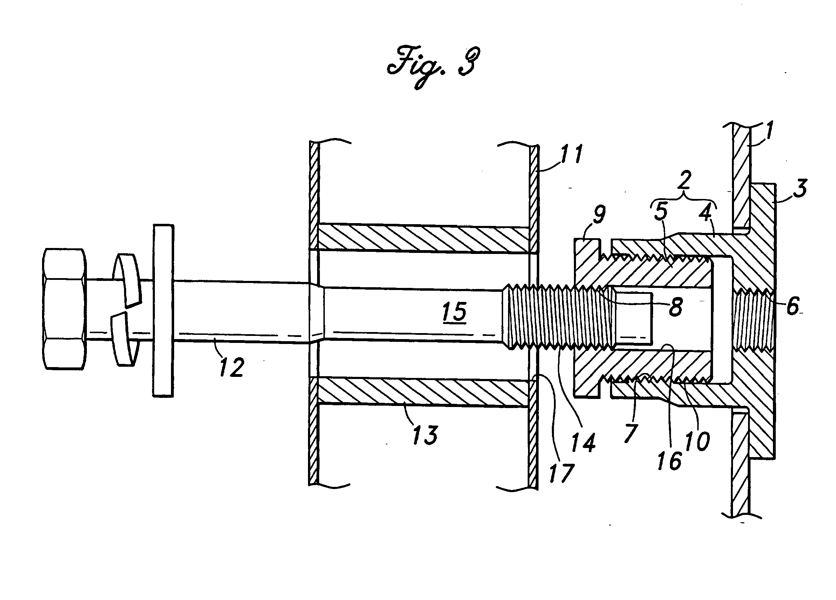

When the male threaded part 14 of the bolt 12 having an adhesive agent or other friction enhancing agent applied thereto is threaded into the female threaded hole 8 on the open end of the spacer member 5, the frictional force produced by the adhesive agent causes the spacer member 5 to turn fast with the threaded bolt 12. Because the spacer member 5 is threaded into the nut member 4 by a reverse thread, if the threaded bolt 12 is threaded in clockwise direction, the spacer member 5 moves axially in the direction to be pulled out of the nut member 4 (see Figure 3).

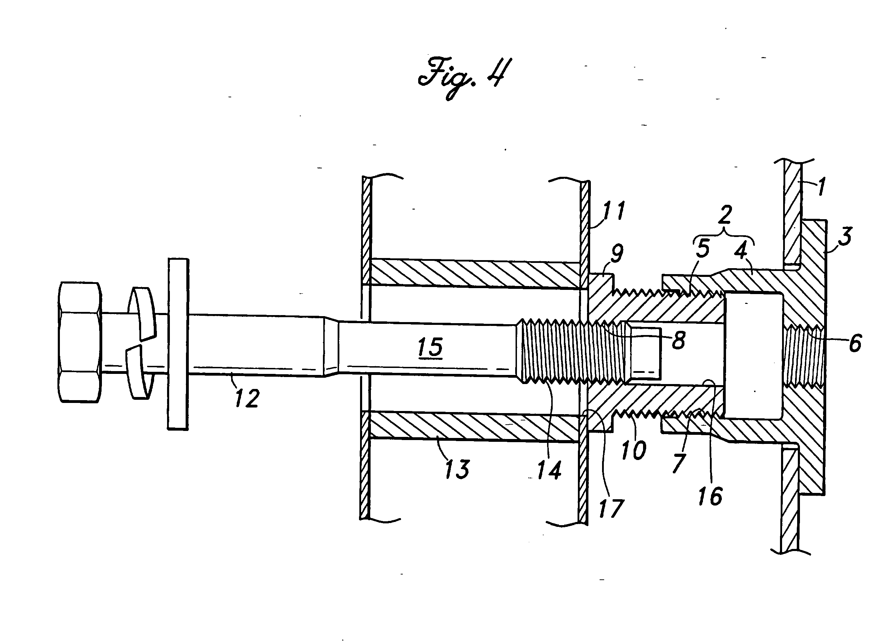

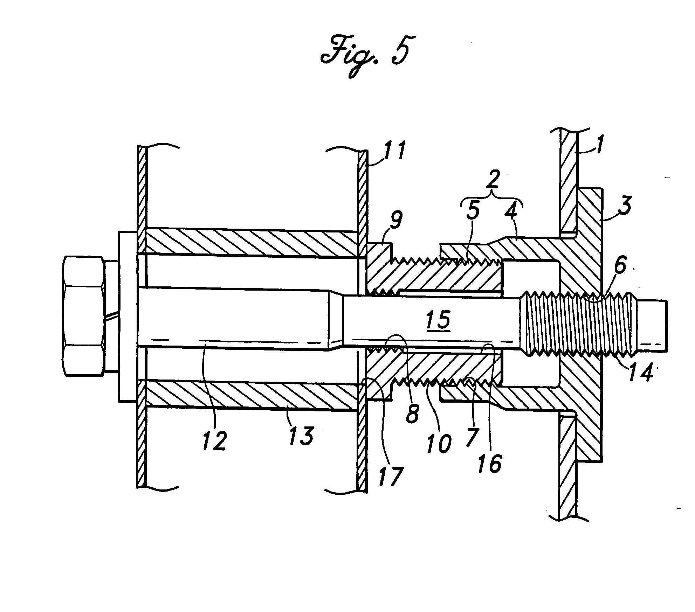

As the threaded bolt 12 is threaded, the outer end surface of the spacer member 5 abuts the inner surface of the front pillar 11 facing the side plate 1, and the resulting frictional resistance prevents any further rotation of the spacer member 5 (see Figure 4). Then, the male threaded part 14 of the threaded bolt 12 passes through the female threaded hole 8 of the spacer member 5, and reaches the female threaded hole 6 of the bottom wall of the nut member 4. Because the reduced diameter portion 15 of the threaded bolt 12 is smaller in diameter than the inner diameter of the female threaded hole 8 of the spacer member 5, the male threaded part 14 of the bolt 12 is threaded into the female threaded hole 6 of the nut member 4. If the bolt 12 is then fully threaded, the spacer member 5 pushes apart the front pillar 11 and the nut member 4 away from each other, and the side plate 1 of the steering hanger pipe is firmly attached to the front pillar 11 (see Figure 5). The adhesive agent may also be applied to the threaded hole 8 of the spacer member 5. In any event, the adhesive agent applied to the male threaded part 14 of the bolt 12 or the threaded hole 8 of the spacer member 5 also adheres to the female threaded hole 6 of the nut member 4, and this prevents the loosening of the fastened part during use.

Thereby, the threaded bolt 12 can be fastened from outside the vehicle body, and this significantly improves the work efficiency.

When the side plate 1 (of the steering hanger pipe) is required to be removed, the bolt 12 can be removed by turning the bolt 12 in counter clockwise direction. At this time, because the reverse threaded part may be prevented from turning by the axial force acting on the spacer, the spacer member 5 may continue to push apart the opposing parts. By providing a pair of parallel surfaces on the outer circumferential surface of the flange 9 of the spacer member 5 or other engagement portion for engaging a tool such as a wrench for turning the spacer member 5, the work for unfastening the attaching arrangement is simplified.

The adjust nut assembly 2 can perform its function even when it is provided only on one end of the steering hanger pipe, but may also be provided on each end of the steering hanger pipe as can be readily appreciated.

Thus, according to the foregoing embodiment, because the spacer member is provided with the function to extend and retract in the axial direction, the positioning of the steering hanger pipe is facilitated because a gap may be defined between the side plate and front pillar when attaching the steering hanger pipe to the front pillar, and the dimensional precision between the steering hanger pipe and the front pillar of the vehicle body is not required to be unduly high because the gap is filled as the bolt is fastened and the two parts are firmly attached to each other. The threaded bolt can be fastened from the axial direction for each end of the frame structural member, and the frame structural member can be directly attached to the vehicle body without the intervention of an auxiliary member such as a bracket without compromising the rigidity of the surrounding frame structure.

Although the present invention has been described in terms of a preferred embodiment thereof, it is obvious to a person skilled in the art that various alterations and modifications are possible without departing from the scope of the present invention which is set forth in the appended claims.

In an arrangement for attaching a pair of members to each other, a spacer member (5) provides the function to extend and retract in the axial direction so that the positioning of a first member (1) to a second member (11) is facilitated because a gap may be defined between the two members before joining them to each other, and the dimensional precision between the steering hanger pipe and the front pillar of the vehicle body is not required to be unduly high. This gap is filled by the spacer member as a threaded bolt is fastened owing to the action of a reverse thread, and the two members can be firmly attached to each other without involving any unacceptable deformation of the two members.

## Claims

1. An arrangement for attaching a pair of members to each other, comprising:
a nut member (4) attached to or provided on a first member (1), said nut member being provided with a small normal threaded hole (6) near an axial end of said nut member remote from a second member (11) and a large reverse threaded hole (7) near the other axial end of said nut member adjacent to the second member and axially aligned with said small threaded hole;
a substantially cylindrical spacer member (5) defining a central through hole (16) therein, said spacer member being provided with a large reverse threaded part (10) on an outer circumferential surface thereof which is threaded into said large reverse threaded hole of said nut member and a small normal threaded hole (8) having a same configuration as said small normal threaded hole of said nut member and axially aligned with said large reverse threaded hole; and
a threaded bolt adapted to be passed through a hole (17) provided in said second member and provided with a normal threaded part (14) which is adapted to be threaded into said small normal threaded holes of said spacer and nut members,
wherein a friction enhancing agent is applied to said threaded part of said threaded bolt and/or said threaded hole of said spacer member.

2. An attaching arrangement according to claim 1, wherein said nut member comprises a cylindrical main body passed through an opening provided in said first member and a radial flange (3) formed on one axial end of said cylindrical part and abutting an end surface of said first member, said flange being fixedly attached to said end surface of said first member.

3. An attaching arrangement according to claim 1, wherein said spacer member is provided with a cylindrical main body on which said large reverse threaded part is formed, and a flange portion (9) on an axial end of said cylindrical main body facing said second member.

4. An attaching arrangement according to claim 1, wherein said second member is provided with a pair of sheet metal members and a collar member (13) extending between said sheet metal members, said hole (17) of said first member being passed through said sheet metal members and collar member in an axial alignment.

5. An attaching arrangement according to claim 1, wherein said threaded bolt is provided with a small diameter part (15) extending from an end of said threaded part thereof remote from a front end thereof, said small diameter part being provided with an outer diameter smaller than an inner diameter of said small threaded hole (8) of said spacer member.

6. An attaching arrangement according to claim 1, wherein said first member consists of a part of a steering hanger pipe, and said second member consists of a front pillar of a motor vehicle.

7. An attaching arrangement according to claim 1, wherein said nut member is provided with an engagement portion for engaging a tool for turning said nut member.

## Patentansprüche

1. Anordnung zum Befestigen eines Paars von Elementen aneinander, umfassend:
ein Mutterelement (4), das an einem ersten Element (1) angebracht oder vorgesehen ist, wobei das Mutterelement nahe einem axialen Ende des Mutterelements entfernt von einem zweiten Element (11) mit einem kleinen normalen Gewindeloch und nahe dem anderen axialen Ende des Mutterelements benachbart dem zweiten Element und axial fluchtend mit dem kleinen Gewindeloch mit einem großen Gegengewindeloch (7) versehen ist;
ein im Wesentlichen zylindrisches Abstandshalterelement (5), in dem ein zentrales Durchgangsloch (16) definiert ist, wobei das Abstandshalterelement an seiner Außenumfangsfläche mit einem großen Gegengewindeteil (10), das in das große Gegengewindeloch des Mutterelements geschraubt ist, und mit einem kleinen normalen Gewindeloch
(8), das die gleiche Konfiguration wie das kleine normale Gewindeloch des Mutterelements hat und mit dem großen Gegengewindeloch axial fluchtet, versehen ist; und
einen Gewindebolzen, der zum Einsetzen durch ein Loch (17) ausgelegt ist, das in dem zweiten Element vorgesehen ist, und mit einem normalen Gewindeteil (14) versehen ist, das zum Einschrauben in die kleinen normalen Gewindelöcher des Abstandshalters und der Mutterelemente ausgelegt ist,
wobei ein Reibungsverbesserungsmittel auf das Gewindeteil des Gewindebolzens und/oder das Gewindeloch des Abstandshalterelements aufgebracht ist.

2. Befestigungsanordnung nach Anspruch 1, worin das Mutterelement einen zylindrischen Hauptkörper, der durch eine Öffnung hindurchtritt, die in dem ersten Element vorgesehen ist, sowie einen radialen Flansch (3), der an einem axialen Ende des zylindrischen Teils ausgebildet ist und sich auf einer Endoberfläche des ersten Elements abstützt, aufweist, wobei der Flansch an der Endoberfläche des ersten Elements fest angebracht ist.

3. Befestigungsanordnung nach Anspruch 1; worin das Abstandshalterelement mit einem zylindrischen Hauptkörper, an dem das große Gegengewindeteil ausgebildet ist, sowie einem Flanschabschnitt (9) an einem zum zweiten Element weisenden axialen Ende des zylindrischen Hauptkörpers versehen ist.

4. Befestigungsanordnung nach Anspruch 1, worin das zweite Element mit einem Paar von Metallblechelementen und einem Kragenelement (13) versehen ist, das sich zwischen den Metallblechelementen erstreckt, wobei das Loch (17) des ersten Elements durch die Metallblechelemente und das Kragenelement in axialer Ausrichtung hindurchtritt.

5. Befestigungsanordnung nach Anspruch 1, worin der Gewindebolzen mit einem Teil (15) kleinen Durchmessers versehen ist, das sich von einem Ende seines Gewindeteils, fern von seinem Vorderende, erstreckt, worin das Teil kleinen Durchmessers mit einem Außendurchmesser versehen ist, der kleiner ist als ein Innendurchmesser des kleinen Gewindelochs (8) des Abstandshalterelements.

6. Befestigungsanordnung nach Anspruch 1, worin das erste Element aus einem Teil eines Lenkungsaufhängungsrohrs besteht, und das zweite Element aus einer Frontsäule eines Kraftfahrzeugs besteht.

7. Befestigungsanordnung nach Anspruch 1, worin das Mutterelement mit einem Eingriffsabschnitt zum Eingriff eines Werkzeugs zum Drehen des Mutterelements versehen ist.

## Revendications

1. Agencement pour fixer une paire d'éléments entre eux, comprenant :
un élément formant écrou (4) fixé sur ou prévu sur un premier élément (1), ledit élément formant écrou étant prévu avec un petit trou fileté (6) normal à proximité d'une extrémité axiale dudit élément formant écrou à distance d'un second élément (11) et un grand trou fileté inversé (7) à proximité de l'autre extrémité axiale dudit élément formant écrou adjacent au second élément et axialement aligné avec ledit petit trou fileté ;
un élément d'espacement (5) sensiblement cylindrique définissant un trou de passage central (16) à l'intérieur de celui-ci, ledit élément d'espacement étant prévu avec une grande partie filetée inversée (10) sur sa surface circonférentielle externe qui est filetée dans ledit grand trou fileté inversé dudit élément formant écrou et un petit trou fileté (8) normal ayant une même configuration que ledit petit trou fileté normal dudit élément formant écrou et axialement aligné avec ledit grand trou fileté inversé ; et
un boulon fileté adapté pour passer à travers un trou (17) prévu dans ledit second élément et prévu avec une partie filetée (14) normale qui est adaptée pour être filetée dans lesdits petits trous filetés normaux desdits éléments d'espacement et formant écrou,
dans lequel un agent d'accroissement de friction est appliqué sur ladite partie filetée dudit boulon fileté et/ou ledit trou fileté dudit élément d'espacement.

2. Agencement de fixation selon la revendication 1, dans lequel ledit élément formant écrou comprend un corps principal cylindrique qui passe par une ouverture prévue dans ledit premier élément et un rebord radial (3) formé sur une extrémité axiale de ladite partie cylindrique et venant en butée contre une surface d'extrémité dudit premier élément, ledit rebord étant fixé de manière fixe sur ladite surface d'extrémité dudit premier élément.

3. Agencement de fixation selon la revendication 1, dans lequel ledit élément d'espacement est prévu avec un corps principal cylindrique sur lequel ladite grande partie filetée inversée est formée et une partie de rebord (9) sur une extrémité axiale dudit corps principal cylindrique faisant face audit second élément.

4. Agencement de fixation selon la revendication 1, dans lequel ledit second élément est prévu avec une paire d'éléments en tôle et un élément formant collier (13) s'étendant entre lesdits éléments en tôle, ledit trou (17) dudit premier élément traversant lesdits éléments en tôle et l'élément formant collier dans un alignement axial.

5. Agencement de fixation selon la revendication 1, dans lequel ledit boulon fileté est prévu avec une partie de petit diamètre (15) s'étendant à partir d'une extrémité de sa partie filetée à distance de son extrémité avant, ladite partie de petit diamètre étant prévue avec un diamètre externe inférieur à un diamètre interne dudit petit trou fileté (8) dudit élément d'espacement.

6. Agencement de fixation selon la revendication 1, dans lequel ledit premier élément se compose d'une partie de tuyau de chaise de palier de direction et ledit second élément se compose d'un pilier avant d'un véhicule à moteur.

7. Agencement de fixation selon la revendication 1, dans lequel ledit élément formant écrou est prévu avec une partie de mise en prise pour mettre en prise un outil afin de faire pivoter ledit élément formant écrou.
